# EUROPÄISCHE PATENTSCHRIFT

(11) **EP 3 959 796 B1**
(45) Veröffentlichungstag und Bekanntmachung des Hinweises auf die Patenterteilung: **22.05.2024**
(21) Anmeldenummer: 20733357.6
(22) Anmeldetag: 29.05.2020
(51) Int. Cl.: H02K 15/00, H02K 1/16, H02K 15/06, H02K 3/12

(54) **STATOR FÜR EINE ROTIERENDE ELEKTRISCHE MASCHINE**
STATOR FOR A ROTATING ELECTRIC MACHINE
STATOR POUR UNE MACHINE ÉLECTRIQUE ROTATIVE

(30) Priorität: 07.06.2019 EP 19179050
(43) Veröffentlichungstag der Anmeldung: 02.03.2022
(73) Patentinhaber: Innomotics GmbH, 90441 Nürnberg (DE)
(72) Erfinder: SABELFELD, Ilja, 3011 Bern (CH); CENTNER, Matthias, 10555 Berlin (DE)
(74) Vertreter: Siemens Patent Attorneys
(86) Internationale Anmeldenummer: PCT/EP2020/065032
(87) Internationale Veröffentlichungsnummer: WO 2020/245051

(56) Entgegenhaltungen:
- EP-A1- 2 395 632
- WO-A1-2015/151615
- JP-B2- 3 474 660
- US-A- 5 789 840
- US-B1- 6 969 939

## Beschreibung

Die Erfindung betrifft einen Stator für eine rotierende elektrische Maschine. Die Erfindung betrifft weiterhin eine rotierende elektrische Maschine mit einem solchen Stator sowie ein Verfahren zur Montage eines derartigen Stators.

Statoren sind als Bestandteil von rotierenden elektrischen Maschinen aus dem Stand der Technik bekannt. Eine elektrisch leitende Wicklung eines Stators einer rotierenden elektrischen Maschine wird häufig als so genannte Zweischichtwicklung ausgeführt. Unter einer Zweischichtwicklung versteht man eine Drehstromwicklung, die zweilagig durch jede Nut eines sogenannten Statorblechpakets geführt ist, wobei durch jede Nut nutgrundseitig eine so genannte Wicklungsunterlage und nutöffnungsseitig eine so genannte Wicklungsoberlage der Statorwicklung verläuft.

Die Drehstromwicklung wird entweder als eine so genannte Spulenwicklung oder als eine so genannte Stabwicklung ausgeführt. Beispielsweise weist eine Zweischicht-Stabwicklung so genannte Roebelstäbe auf, die jeweils nur einen Leiter mit mehreren verdrillten, zueinander parallel geschalteten Teilleitern aufweisen und in der Wicklungsunterlage oder Wicklungsoberlage durch eine Nut verlaufen. Eine Zweischicht-Stabwicklung weist daher eine Leiterzahl von Zwei auf.

Bei Elektromotoren mit einem großen Statorblechpaket-Außendurchmesser, z. B. größer als 5 m, kann aus verschiedenen Gründen eine Segmentierung des Statorblechpakets erforderlich sein. Beispielsweise ist eine Segmentierung notwendig, wenn eine Größe und ein Gewicht des Elektromotors eine vorhandene Krankapazität überschreiten. Des Weiteren kann eine Segmentierung erforderlich sein, wenn ein Platzbedarf eines einteiligen Stators in einer Imprägniertränke einer sogenannten VPI Anlage (Vacuum Pressure Impregnation), in welcher ein Prozessschritt zur Herstellung einer Hochspannungsisolierung durchgeführt wird, zu groß ist oder ein Transport des Stators nur in segmentierter Form möglich ist. Die einzelnen Statorsegmente können anschließend an einem Einsatzort der elektrisch rotierenden Maschine zusammengesetzt werden.

Die Segmentierung des Stators bedingt notwendigerweise eine Segmentierung der Wicklung. Dies stellt bei einer Zweischicht-Spulenwicklung jedoch ein Problem hinsichtlich segmentübergreifender Wicklungselemente dar, da hierbei Stabstirnseiten insbesondere tangential über eine Längsseite eines Statorsegments ragen, was ein Ineinanderführen der Statorsegmente in axialer Form verhindert, so dass ein Zusammensetzen insbesondere von schwergewichtigen Statorsegmenten nur schwer möglich ist.

EP 3 118 973 A1 offenbart eine rotierende elektrische Maschine, die einen Stator und einen Rotor umfasst. Der Stator weist Spulenschlitze auf, die in einem Stator- Eisenkern angeordnet sind, und eine als Zweischichtwicklung ausgebildete Spulenwicklung, die in den Spulenschlitzen angeordnet ist. Die Spulenwicklung umfasst mehrere Spulen mit jeweils einer an einer äußeren Umfangsseite in den Spulenschlitzen angeordneten unteren Spule und einer an einer inneren Umfangsseite in den Spulenschlitzen angeordneten oberen Spule. Die untere und die obere Spule sind dabei endseitig in eine radiale Richtung gebogen, wobei ein Abstand von dem gebogenen Endbereich der oberen Spule zur Spulenschlitzseite länger ist als ein Abstand von dem gebogenen Endbereich der unteren Spule zur Spulenschlitzseite.

Aus der US 6969939 B1 ist eine mechanische und elektrische Verbindung zweier getrennter Statorwicklungen bekannt. Hierfür sind mechanische und elektrische Verbinder vorgesehen, welche Wicklungsenden aufnehmen.

Aus der EP 2395632 A1 ist eine Statorsegmenteinheit bekannt, geeignet zum Aufbau eines ringförmigen Stators im zusammengesetzten Zustand, mit einem Statorjoch mit mindestens einem aus dem Joch herausragenden Statorzahn, umfassend mindestens eine Statorwicklung mit einem ersten Wicklungsabschnitt, die in der Nähe des Zahns befestigt sind, und einem zweiten Wicklungsabschnitt, der sich frei von der Statorsegmenteinheit erstreckt.

Aus der US 5,789,840 A ist ein Statorwicklungselement einer dynamoelektrischen Maschine bekannt, das Wicklungselemente mit einem verkürzten Ende aufweist, das von dem Stator der Maschine vorsteht. Das vorstehende Ende des Wicklungselements hat nur eine einzige Biegung in seiner vorstehenden Länge. Ein spezieller Verbinder für die Wicklungselemente überspannt das abisolierte Ende jedes Wicklungselements. Die Verbindung jedes Elements des Paars von Verbindern wird durch ein gemeinsames leitendes Element erleichtert, das in einer Öffnung aufgenommen wird, die in jedem Verbinderelement vorgesehen ist.

Aus der JP 3474660 B2 ist ein Motor bekannt, bei dem zur Verbesserung des Wirkungsgrades und der Zuverlässigkeit ein Zusammensetzen der Statorwicklung aus einem einzigen Leiter erfolgt, wobei nahezu U-förmig gebogene Leiter verwendet werden. Das Verbinden der nahezu U-förmigen Leiter erfolgt durch einen Verbindungsleiter, wodurch die Anzahl der Verbindungen und der Widerstand der Statorwicklung verringert werden.

Aus der JP 6277264 B2 ist ein Stator für eine elektrische rotierende Maschine bekannt. In diesem Stator für die rotierende elektrische Maschine weist eine zweite Verbindungswicklung einen inneren Verbindungswicklungsabschnitt, einen äußeren Verbindungswicklungsabschnitt und einen axialen Verlängerungsabschnitt auf, der den äußeren Verbindungswicklungsabschnitt mit dem inneren Verbindungswicklungsabschnitt verbindet. Der innere Verbindungswicklungsabschnitt, der äußere Verbindungswicklungsabschnitt und der axiale Verlängerungsabschnitt sind aus einem einzigen Leiter konfiguriert.

Aus der US 5789840 ist ein Stator einer dynamoelektrischen Maschine bekannt, welcher spezielle Verbinder für vorstehende Enden von Elementen der Wicklung aufweist. Das vorstehende Ende weist dabei nur eine Biegung auf.

Der Erfindung liegt die Aufgabe zugrunde, einen gegenüber dem Stand der Technik verbesserten Stator, eine rotierende elektrische Maschine sowie ein Verfahren zur Montage eines derartigen Stators anzugeben.

Hinsichtlich des Stators wird die Aufgabe erfindungsgemäß mit den in Anspruch 1 angegebenen Merkmalen gelöst. Hinsichtlich der rotierenden elektrischen Maschine wird die Aufgabe erfindungsgemäß mit den in Anspruch 6 angegebenen Merkmalen gelöst. Hinsichtlich des Verfahrens wird die Aufgabe erfindungsgemäß mit den in Anspruch 7 angegebenen Merkmalen gelöst.

Vorteilhafte Ausgestaltungen der Erfindung sind Gegenstand der Unteransprüche.

Ein erfindungsgemäßer Stator für eine rotierende elektrische Maschine umfasst ein Blechpaket, das eine Mehrzahl von miteinander verbundenen Statorsegmenten aufweist, die sich jeweils von einer ersten Stirnseite zu einer der ersten Stirnseite gegenüberliegenden zweiten Stirnseite des Blechpakets erstrecken, und eine elektrisch leitende Wicklung, welche als eine Zweischicht-Stabwicklung ausgebildet ist und welche eine Wicklungsoberlage und eine Wicklungsunterlage aufweist. Die Wicklungsoberlage umfasst eine Mehrzahl von elektrisch leitfähigen Oberstäben. Die Wicklungsunterlage umfasst eine Mehrzahl von elektrisch leitfähigen Unterstäben. Dabei weist jedes Statorsegment eine Mehrzahl von sich in eine axiale Richtung erstreckenden Nuten auf, wobei in jeder Nut ein Oberstab und ein Unterstab in einer radialen Richtung nebeneinander angeordnet sind, insbesondere mittels eines Abstandshalters getrennt übereinander angeordnet sind, und an jeder Stirnseite des Blechpakets mit jeweils einem Stirnseitenbereich aus der Nut in axialer Richtung heraus ragen, und wobei mindestens ein Oberstab eines Statorsegments mit einem Unterstab eines benachbarten Statorsegments mittels eines Verbindungselements elektrisch leitend verbunden ist. Das Verbindungselement ist insbesondere mittels einer stoffschlüssigen und/oder einer kraftschlüssigen Verbindung mit dem Oberstab und/oder dem Unterstab des benachbarten Statorsegments verbunden. Dies kann eine elektrische und/oder mechanische Verbindung betreffen.

Der derart ausgebildete Stator ermöglicht den Bau großer elektrischer rotierender Maschinen mit größeren axialen Längen gegenüber konventionellen Maschinen. Dies ist insbesondere durch die Konfiguration der Wicklung begründet, bei welcher jeweils Oberstab und Unterstab axial aus der Nut herausragen. Somit kann die Wicklung entsprechend einer Anzahl der Statorsegmente ebenfalls segmentiert werden, ohne dass dabei Wicklungselemente, d. h. Oberstab und/oder Unterstab, über parallel zu einer Längsachse des Stators verlaufende Längsseiten der einzelnen Statorsegmente hinausragen.

Daraus resultierend können die Statorsegmente vor der Montage bereits mit einem Wicklungsabschnitt versehen werden, wobei Ober- und Unterstäbe in einem segmentübergreifenden Bereich, also in einem Bereich an und nahe einer Fügestelle, noch nicht mittels eines Verbindungselements elektrisch leitend verbunden sind. Dies ermöglicht es, dass die Wicklung oder die Wicklungsabschnitte nicht über die Längsseite des entsprechenden Statorsegments hinausragt, so dass ein einfaches und sicheres Zusammensetzen der Statorsegmente möglich ist.

Die Ober- und Unterstäbe, welche nicht in einem segmentübergreifenden Bereich angeordnet sind, werden bereits vor dem Zusammensetzen der Statorsegmente mittels des Verbindungselementes elektrisch leitend miteinander verbunden, wobei hierbei Ober- und Unterstäbe, die in demselben Statorsegment angeordnet sind, elektrisch leitend miteinander verbunden werden. Die mit den Wicklungssegmenten versehenen Statorsegmente können anschließend in einem Isolierbad getränkt und damit imprägniert werden. Der segmentierte Stator ermöglicht somit eine vollimprägnierte isolierte Wicklung.

In einer Ausgestaltung des Stators ist das freie Ende des Oberstabes vom freien Ende des in Umfangsrichtung zu diesem Oberstab versetzten Unterstab distanziert.

In einer Ausgestaltung des Stators sind die Verbindungselemente aus dem gleichen Material wie die Unterstäbe und/oder die Oberstäbe. So können thermische Spannungen reduziert werden. Das Material ist insbesondere Kupfer oder eine Kupferlegierung.

Die Erfindung sieht vor, dass ein Verbindungselement, insbesondere jedes Verbindungselement, ein freies Ende eines Oberstabs mit einem freien Ende eines in Umfangsrichtung zu diesem Oberstab versetzten Unterstabs elektrisch leitend verbindet.

Erfindungsgemäß weist das Verbindungselement, insbesondere jedes Verbindungselement, einen Schrägabschnitt auf, welcher zwei zu diesem abgewinkelte Enden miteinander verbindet, wobei das eine Ende des Verbindungselements, insbesondere jedes Verbindungselements, mit dem freien Ende eines Unterstabs und/oder das andere Ende jedes Verbindungselements mit dem freien Ende eines Oberstabs elektrisch leitend verbunden ist. Das derart ausgebildete Verbindungselement ermöglicht es, den Oberstab und Unterstab auf einem möglichst kurzen Weg elektrisch leitend miteinander zu verbinden. Beispielsweise ist das Verbindungselement als ein Verbindungsbügel ausgebildet, wodurch dieses einfach und mechanisch stabil mit dem Ober- und Unterstab verbindbar ist. Daraus resultiert in vorteilhafter Weise auch ein einfaches elektrisches Verbinden der Ober- und Unterstäbe im segmentübergreifenden Bereich nach dem Zusammensetzen der Statorsegmente.

In einer Ausgestaltung ist das Verbindungselement, welches insbesondere vorgeformt ist, derart gestaltet, dass dieses den Oberstab mit dem Unterstab elektrisch und mechanisch verbindet, wobei das Ende des Oberstabes und das Ende des Unterstabes in Umfangsrichtung, also um einen Winkel, versetzt ist und/oder das Ende des Oberstabes und das Ende des Unterstabes in einer achsialen Längsrichtung der elektrischen Maschine (betrifft deren Rotationsachse) an unterschiedlichen Positionen enden. Diese Stäbe, also die Oberstäbe und die Unterstäbe, sind insbesondere ungleich, insbesondere asymmetrisch ausgeführt und insbesondere auch vorgefertigt.

In einer Ausgestaltung des Verbindungselementes ist der Schrägabschnitt zumindest doppelt so lang wie zumindest ein abgewinkeltes Ende. So können thermische Spannungen kompensiert werden.

In einer Ausgestaltung des Verbindungselementes spannen die abgewinkelten Enden des Verbindungselementes Ebenen auf, wobei diese Ebenen parallel verlaufen.

In einer Ausgestaltung des Verbindungselementes spannen die abgewinkelten Enden des Verbindungselementes Ebenen auf, welche im eingebauten Zustand des Verbindungselementes in den Stator durch die Rotationsachse des zum Stator zugehörigen Rotors gehen.

Gemäß der ersten Alternative der Erfindung sind an wenigstens einer Stirnseite des Blechpakets der Stirnseitenbereich jedes Oberstabs in axialer Richtung geradlinig verlaufend ausgebildet und der Stirnseitenbereich jedes Unterstabs zweifach gekröpft ausgebildet, wobei das freie Ende jedes Oberstabs und jedes Unterstabs in axiale Richtung ragen. Insbesondere ragen alle Oberstäbe und Unterstäbe auf der wenigstens einen Stirnseite in axialer Richtung gleich weit aus den Nuten heraus. Dadurch liegen die Stabenden der Ober- und Unterstäbe in einer gemeinsamen Ebene, so dass die Verbindung mittels eines Verbindungselements sehr einfach gestaltet werden kann.

Gemäß der zweiten Alternative der Erfindung sind an wenigstens einer Stirnseite des Blechpakets der Stirnseitenbereich jedes Oberstabs und der Stirnseitenbereich jedes Unterstabs einfach gekröpft ausgebildet, wobei das freie Ende jedes Oberstabs und jedes Unterstabs in radiale Richtung ragen. Insbesondere ragen auf der wenigstens einen Stirnseite die Oberstäbe in axialer Richtung weiter aus den Nuten heraus als die Unterstäbe.

Eine weitere Ausgestaltung der Erfindung sieht vor, dass je zwei benachbarte Statorsegmente mittels einer Nut-FederVerbindung form- und kraftschlüssig miteinander verbunden sind. Bei der Nut-Federverbindung ist insbesondere eine Fuge an einer Längsseite eines Statorsegments vorgesehen, in die ein Spund, welcher an einer Längsseite des benachbarten Statorsegments angeordnet ist, formschlüssig eingreift. Eine solche Verbindung ermöglicht nicht nur ein einfaches formschlüssiges Ineinanderschieben der Statorsegmente, sondern auch eine mechanisch stabile Verbindung aufgrund einer ausreichend hohen Scherfestigkeit, die ein Spund in einer Nut-Feder-Verbindung in bekannter Weise aufweist.

Eine erfindungsgemäße rotierende elektrische Maschine weist einen erfindungsgemäßen Stator auf. Die Vorteile einer derartigen rotierenden elektrischen Maschine ergeben sich aus den oben genannten Vorteilen des erfindungsgemäßen Stators.

Bei einem erfindungsgemäßen Verfahren zur Montage eines erfindungsgemäßen Stators werden in jeder Nut jedes Statorsegments ein Oberstab und ein Unterstab angeordnet. Jeder Oberstab wird mit einem ihm zugeordneten Unterstab mittels eines Verbindungselements verbunden, sofern der Oberstab und der Unterstab in Nuten desselben Statorsegments angeordnet sind. Anschließend wird jedes Statorsegment mit den in seinen Nuten angeordneten Oberstäben und Unterstäben und den Verbindungselementen, die jeweils einen Oberstab und einen Unterstab des Statorsegments verbinden, imprägniert und damit isoliert. Die imprägnierten Statorsegmente werden dann form- oder kraftschlüssig miteinander verbunden. Nach dem Verbinden der imprägnierten Statorsegmente wird mindestens ein Oberstab eines Statorsegments mit einem Unterstab eines benachbarten Statorsegments mittels eines Verbindungselements elektrisch leitend verbunden.

Das Verfahren ermöglicht eine einfache Montage des Stators mit einer variierbaren Zahl an Statorsegmenten, insbesondere an einem Einsatzort der rotierenden elektrischen Maschine, da die Wicklung derart ausgebildet ist, dass alle Nuten bereits vor dem Imprägnieren mit Wicklungselementen gefüllt sind. Somit kann das Verfahren auch für sehr große Maschinen mit vielen Statorsegmenten angewendet werden.

In einer Ausgestaltung des Verfahrens wird jedes Verbindungselement mit dem freien Ende eines Oberstabs und dem freien Ende eines Unterstabs verbunden, insbesondere verlötet. Dies ermöglicht eine kostengünstige, mechanisch stabile und elektrisch leitende Verbindung.

Eine weitere Ausgestaltung des Verfahrens sieht vor, dass für jedes Verbindungselement, das einen Oberstab und einen Unterstab zweier benachbarter Statorsegmente verbindet, ein Verbindungsbereich zwischen dem Verbindungselement und dem Oberstab und ein Verbindungsbereich zwischen dem Verbindungselement und dem Unterstab elektrisch isoliert werden. Das Verfahren ermöglicht somit eine nahezu vollgetränkte Imprägnierung der Wicklung, da nur Verbindungsstellen der nach dem Verbinden der imprägnierten Statorsegmente angeordneten Verbindungselemente einzeln isoliert werden. Da hierbei nur ein kleiner Teil der Wicklung nachträglich isoliert wird, kann ein Montageaufwand gegenüber konventionellen Statoren, bei denen beispielsweise jedes Wicklungssegment einzeln isoliert wird, reduziert werden.

In einer Ausgestaltung des Verfahrens wird ein Stator der beschriebenen Art gefertigt bzw. zur Fertigung bzw. Montage ein Verbindungsstück der beschriebenen Art verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Seitenansicht einer rotierenden elektrischen Maschine,
- FIG 2: schematisch zwei Statorsegmente während der Montage in einer Seitenansicht,
- FIG 3: schematisch eine perspektivische Teilansicht eines Statorsegments mit einer Zweischicht-Stabwicklung in einer ersten Ausführungsform,
- FIG 4: schematisch eine perspektivische Ansicht eines Wicklungssegments der Zweischicht-Stabwicklung gemäß der ersten Ausführungsform,
- FIG 5: schematisch eine perspektivische Teilansicht zwei miteinander verbundener Statorsegmente mit der Zweischicht-Stabwicklung gemäß der ersten Ausführungsform,
- FIG 6: schematisch eine perspektivische Teilansicht eines Statorsegments mit einer Zweischicht-Stabwicklung in einer zweiten Ausführungsform,
- FIG 7: schematisch eine perspektivische Ansicht eines Wicklungssegments der Zweischicht-Stabwicklung gemäß der zweiten Ausführungsform und
- FIG 8: schematisch eine perspektivische Teilansicht zwei miteinander verbundener Statorsegmente mit der Zweischicht-Stabwicklung gemäß der zweiten Ausführungsform.

Einander entsprechende Teile sind in allen Figuren mit den gleichen Bezugszeichen versehen.

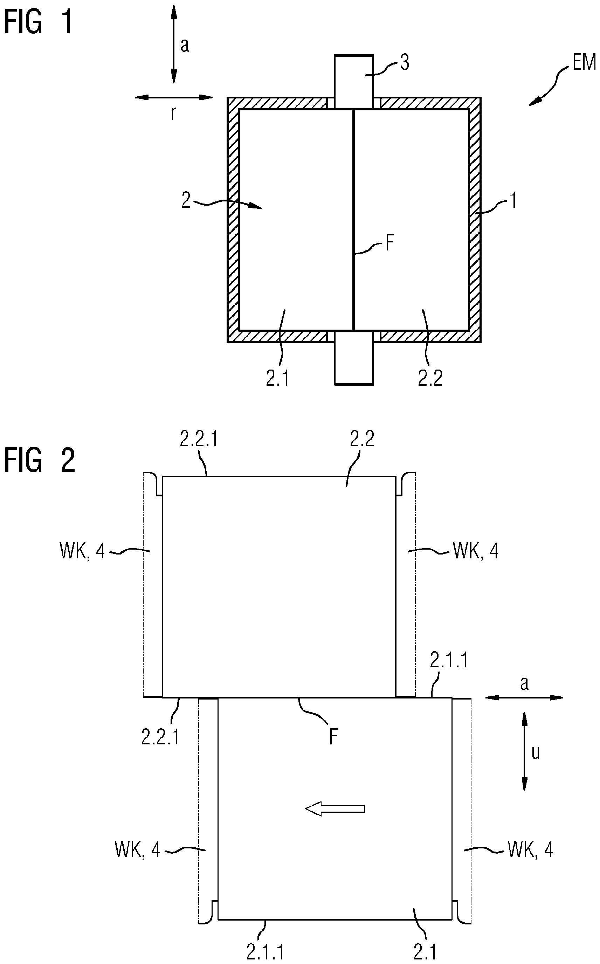

Figur 1 zeigt schematisch eine Seitenansicht einer rotierenden elektrischen Maschine EM in vereinfachter Darstellung.

Die rotierende elektrische Maschine EM ist beispielsweise ein Synchronmotor und umfasst ein Gehäuse 1, in dem ein Stator 2 drehfest gegenüber dem Gehäuse 1 angeordnet ist. Der Stator 2 umfasst mehrere Statorsegmente 2.1, 2.2, die jeweils als ein Blechpaket ausgebildet und zur Bildung eines hohlzylindrischen Stators 2 an Fügestellen F miteinander verbunden sind, wobei sich die Fügestellen F in eine axiale Richtung a erstrecken. Die Anzahl der Statorsegmente 2.1, 2.2 (im gezeigten Ausführungsbeispiel sind zwei Statorsegmente 2.1, 2.2 gezeigt) kann dabei in Abhängigkeit eines Einsatzortes der rotierenden elektrischen Maschine EM variieren.

Die rotierende elektrische Maschine EM umfasst weiterhin einen nicht näher dargestellten Rotor mit einer Rotorwelle 3, wobei der Rotor gegenüber dem Stator 2 drehbar in dem Gehäuse 1 gelagert ist. Im gezeigten Ausführungsbeispiel wird der Rotor vom Stator 2 umgeben, wobei ein Luftspalt zwischen dem Stator 2 und dem Rotor angeordnet ist. Alternativ kann die rotierende elektrische Maschine EM auch derart ausgebildet sein, dass der Rotor den Stator 2 umgibt.

Figur 2 zeigt schematisch zwei Statorsegmente 2.1, 2.2 während der Montage in einer Seitenansicht.

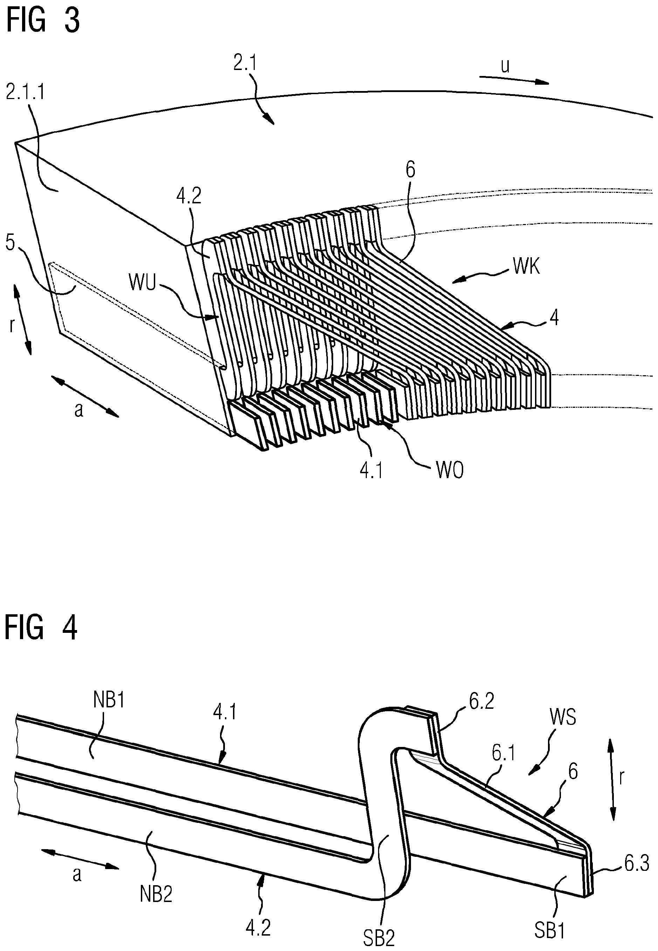

Der Stator 2 ist als Träger einer elektrisch leitenden Wicklung 4 ausgebildet, welche im gezeigten Ausführungsbeispiel zwei stirnseitig aus den Statorsegmenten 2.1, 2.2 herausragende Wicklungsköpfe WK umfasst. Zur Aufnahme der elektrischen Wicklung 4 weisen die Statorsegmente 2.1, 2.2 jeweils eine Mehrzahl von Nuten 5 (siehe Figur 3) auf, welche auch als Blechpaketnuten bekannt sind und in Figur 3 näher beschrieben werden.

Zum Verbinden der gezeigten Statorsegmente 2.1, 2.2 weist eine Längsseite 2.1.1 eines Statorsegments 2.1 eine nicht näher dargestellte Fuge auf, die zur Herstellung einer form- und kraftschlüssigen Verbindung, insbesondere einer Nut-FederVerbindung, mit dem anderen Statorsegment 2.2 vorgesehen ist. Eine Längsseite 2.2.1 des anderen Statorsegments 2.2 weist dazu einen nicht näher gezeigten Spund auf, welcher formschlüssig in die Fuge eingreift.

Wie das vorliegende Ausführungsbeispiel zeigt, werden die Statorsegmente 2.1, 2.2 durch Ineinanderschieben der Längsseiten 2.1.1, 2.2.1 in axialer Richtung a form- und kraftschlüssig miteinander verbunden. Zur Fixierung der Nut-FederVerbindung können weitere nicht dargestellte Befestigungselemente vorgesehen sein.

Die Segmentierung des Stators 2 ermöglicht den Bau großer elektrischer Maschinen mit großen Blechpaketlängen. Beispielsweise werden vor der Montage des Stators 2 die einzelnen Statorsegmente 2.1, 2.2 mit der Wicklung 4 versehen und anschließend imprägniert, so dass Hohlräume in der Wicklung 4 mit einem Isolationsmaterial geschlossen und abgedichtet werden. Die einzelnen mit der Wicklung 4 versehenen Statorsegmente 2.1, 2.2 können dann an einem Einsatzort der rotierenden elektrischen Maschine EM wie oben beschrieben zusammengesetzt werden. Damit dies auf einfache Art und Weise möglich ist, wird eine Wicklung 4 vorgeschlagen, die ein axiales Ineinanderschieben der Statorsegmente 2.1, 2.2 ermöglicht. Im Folgenden werden zwei mögliche Ausführungsformen einer solchen Wicklung 4 beschrieben.

Figur 3 zeigt schematisch eine perspektivische Teilansicht eines Statorsegments 2.1 mit der Wicklung 4 in einer ersten Ausführungsform.

Die Wicklung 4 ist eine Zweischicht-Stabwicklung und umfasst eine Wicklungsoberlage WO und eine Wicklungsunterlage WU. Die Wicklungsoberlage WO umfasst eine Mehrzahl von elektrisch leitfähigen Oberstäben 4.1. und die Wicklungsunterlage WU umfasst eine Mehrzahl von elektrisch leitfähigen Unterstäben 4.2. Die Oberstäbe 4.1 und Unterstäbe 4.2 weisen jeweils in nicht näher gezeigter Weise parallel zueinander angeordnete Teilleiter auf, welche beispielsweise isoliertes Kupfer umfassen und in einem Nutseitenbereich NB sowie in einem Stirnseitenbereich SB (siehe Figur 4) gegeneinander verdrillt oder parallel zueinander verlaufend und damit ohne Verdrillung ausgebführt sind.

Die Ober- und Unterstäbe 4.1 und 4.2 sind in den Nuten 5 des Statorsegments 2.1 angeordnet, wobei in jeweils einer Nut 5 ein Oberstab 4.1 und ein Unterstab 4.2 angeordnet sind. Insbesondere sind in jeder Nut 5 der Oberstab 4.1 und der Unterstab 4.2 in einer radialen Richtung r durch einen Abstandshalter getrennt und übereinander angeordnet. Die Nuten 5 sind in einer inneren Mantelfläche der Statorsegmente 2.1, 2.2 eingebracht und entlang einer Umfangsrichtung u nebeneinander angeordnet. Dabei erstrecken sich die Nuten 5 jeweils in axialer Richtung a von einer Stirnseite des Statorsegments 2.1 zur gegenüberliegenden Stirnseite des Statorsegments 2.2. Im gezeigten Ausführungsbeispiel ist eine der Nuten 5 mit gestrichelten Linien angedeutet. An den Stirnseiten ragen die Ober- und Unterstäbe 4.1, 4.2 jeweils aus der Nut 5 in axialer Richtung a heraus und bilden dabei die Wicklungsköpfe WK aus, die in Figur 2 gezeigt sind.

Des Weiteren sind die Ober- und Unterstäbe 4.1, 4.2 jeweils mittels eines Verbindungselements 6 elektrisch leitend miteinander verbunden. Das Verbindungselement 6 verbindet dabei einen Oberstab 4.1 mit einem in Umfangsrichtung u zu diesem versetzten Unterstab 4.2, wie es im vorliegenden Ausführungsbeispiel gezeigt ist. Das Verbindungselement 6 ist bügelartig ausgebildet und verläuft aufgrund der Versetzung der miteinander zu verbindenden Ober- und Unterstäbe 4.1, 4.2 tangential zur Umfangsrichtung u.

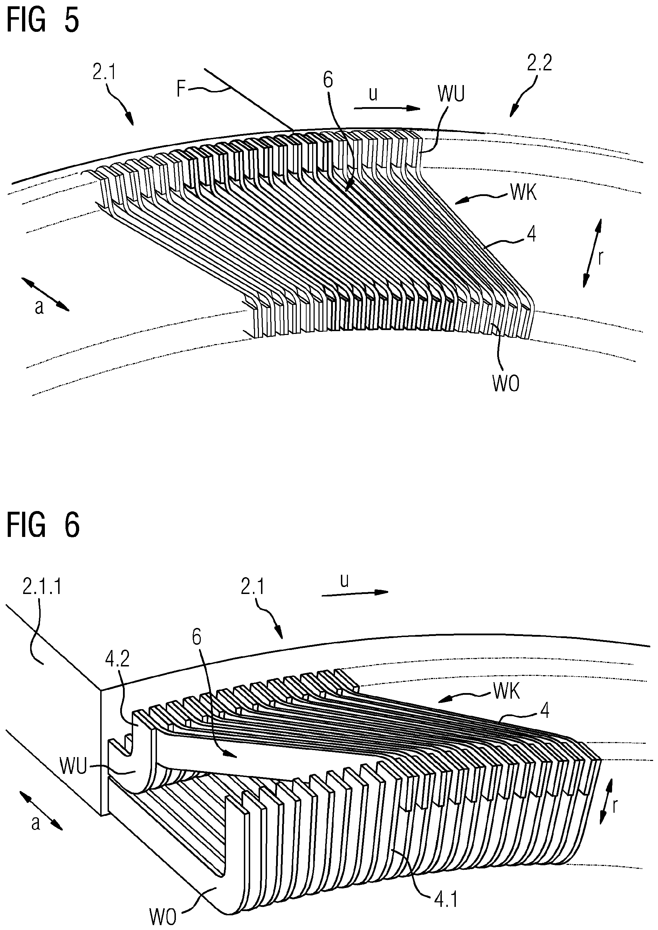

Die Oberstäbe 4.1, welche in einem Bereich einer Segmentgrenze des Statorsegments 2.1, d. h. in einem Bereich an und nahe der Längsseite 2.1.1, angeordnet sind, sind in einem unmontierten Zustand des Stators 2 nicht mit einem Verbindungselement 6 verbunden, da diese jeweils zur elektrischen Verbindung mit einem Unterstab 4.2 des anderen Statorsegments 2.2 vorgesehen sind. Diese Ober- und Unterstäbe 4.1, 4.2 werden erst nach dem Zusammensetzen der Statorsegmente 2.1, 2.2 mittels des Verbindungselements 6 elektrisch leitend miteinander verbunden, wie es Figur 5 beispielhaft zeigt. Dies ermöglicht eine einfache Verbindung der Statorsegmente 2.1, 2.2 in axialer Richtung a, da der Wicklungskopf WK nicht über die Längsseite 2.1.1 hinausragt.

Figur 4 zeigt schematisch eine perspektivische Ansicht eines Wicklungssegments WS gemäß der ersten Ausführungsform.

Das Wicklungssegment WS umfasst einen Oberstab 4.1, einen Unterstab 4.2 und ein Verbindungselement 6.

In der ersten Ausführungsform sind ein Nutenbereich NB1 und ein Stirnseitenbereich SB1 des Oberstabs 4.1 jeweils gerade ausgeführt. Der Nutenbereich NB1 ist der Bereich des Oberstabs 4.1, welcher innerhalb der Nut 5 angeordnet ist. Der Stirnseitenbereich SB1 ragt aus der Nut 5 heraus und ist Bestandteil des Wicklungskopfes WK. Insbesondere ragt der Stirnseitenbereich SB1 in axialer Richtung a aus der Nut 5 heraus, wie es Figur 3 zeigt. Somit verläuft der gesamte Oberstab 4.1 in axialer Richtung a.

Ein Nutenbereich NB2 des Unterstabs 4.2 ist ebenfalls gerade. Der Unterstab 4.2 ragt in axialer Richtung a aus der Nut 5 heraus, weist jedoch einen doppelgekröpften Stirnseitenbereich SB2 auf. Dadurch ist der Stirnseitenbereich SB2 in drei Bereiche aufgeteilt, die zueinander abgewinkelt sind.

Ein erster, unmittelbar aus der Nut 5 herausragender Bereich erstreckt sich in axialer Richtung a, ein zweiter Bereich ist zum ersten Bereich abgewinkelt und erstreckt sich in radialer Richtung r. Der Stirnseitenbereich SB2 ist hier somit radial nach außen gekröpft. Ein dritter Bereich ist vom zweiten Bereich abgewinkelt und erstreckt sich wieder in axiale Richtung a. Der dritte Bereich umfasst ein freies Ende des Unterstabs 4.2. Das freie Ende des Unterstabs 4.2 ist dabei in axialer Richtung a in der gleichen Ebene angeordnet wie ein freies Ende des Oberstabs 4.1. Mit anderen Worten: Der Oberstab 4.1 und der Unterstab 4.2 weisen die gleiche axiale Länge auf.

Das Verbindungselement 6 umfasst ein Metall oder eine Metalllegierung, z. B. massives Kupfer. Wie bereits erwähnt, ist das Verbindungselement 6 bügelartig ausgebildet. Dabei umfasst das Verbindungselement 6 einen rampenförmigen Schrägabschnitt 6.1, welcher zwei zu diesem abgewinkelte Enden 6.2, 6.3 miteinander verbindet. Das Verbindungselement 6 ist hier wie auch in anderen Ausführungen insbesondere vorgeformt. Das Verbindungselement verbindet zwei Stäbe, den Oberstab 4.1 mit dem Unterstab 4.2. Diese Stäbe sind beispielsweise ungleich, insbesondere asymmetrisch ausgeführt und insbesondere auch vorgefertigt. Dies betrifft diese Stäbe wie auch andere Wicklungsstäbe in den weiteren Beispielen.

Ein Ende 6.2 des Verbindungselements 6 erstreckt sich dabei im montierten Zustand des Stators 2 in radialer Richtung r nach außen (siehe Figur 3). Insbesondere liegt hierbei eine Seitenfläche des Endes 6.2 auf einer Seitenfläche des freien Endes des Unterstabs 4.2 an. Ein anderes Ende 6.3 des Verbindungselements 6 erstreckt sich im montierten Zustand des Stators 2 in radialer Richtung r nach innen (siehe Figur 3). Insbesondere liegt hierbei eine Seitenfläche des Endes 6.3 auf einer Seitenfläche des freien Endes des Oberstabs 4.1 an.

Der Schrägabschnitt 6.1 verläuft im montierten Zustand des Stators 2 ausgehend von dem einem Ende 6.2 radial nach innen, dabei jedoch tangential zur Umfangsrichtung u (siehe Figur 3). Mittels des mit dem Schrägabschnitt 6.1 ausgebildeten Verbindungselements 6 können die in Umfangsrichtung u zueinander versetzten Ober- und Unterstäbe 4.1, 4.2 jeweils auf einem möglichst kurzen Weg elektrisch leitend miteinander verbunden werden.

Die Enden 6.2, 6.3 des Verbindungselements 6 können mit den freien Enden des Oberstabs 4.1 und des Unterstabs 4.2 jeweils verlötet oder mittels einer anderen elektrisch leitfähigen Verbindung miteinander verbunden sein.

Figur 5 zeigt schematisch eine perspektivische Teilansicht zwei miteinander verbundener Statorsegmente 2.1, 2.2 mit der Wicklung 4 gemäß der ersten Ausführungsform.

Die gezeigten Statorsegmente 2.1, 2.2 sind an der Fügestelle F miteinander verbunden und umfassen die Wicklung 4, welche nun zusätzlich auch die Verbindungselemente 6 umfasst, die die Oberstäbe 4.1 des einen Statorsegments 2.1 mit den Unterstäben 4.2 des anderen Statorsegments 2.2 elektrisch leitend verbinden. Diese Verbindungselemente 6 werden erst nach dem Zusammensetzen der Statorsegmente 2.1, 2.2, also beispielsweise an einem Einsatzort der rotierenden elektrischen Maschine EM, angeordnet und mit den entsprechenden Ober- und Unterstäben 4.1, 4.2 verbunden. Verbindungsstellen zwischen den Verbindungselementen 6 und den Ober- und Unterstäben 4.1, 4.2 werden in bekannter Weise elektrisch isoliert.

Möglich ist auch, dass die nicht an der Segmentgrenze liegenden Oberstäbe 4.1 und die entsprechend zugeordneten Verbindungselemente 6 einteilig ausgeführt werden, indem der Oberstab 4.1 im Stirnseitenbereich um 90 Grad radial nach außen gebogen und im weiteren Verlauf entsprechend dem Verbindungselement 6 geformt wird. Damit kann eine Anzahl der Verbindungstellen reduziert werden.

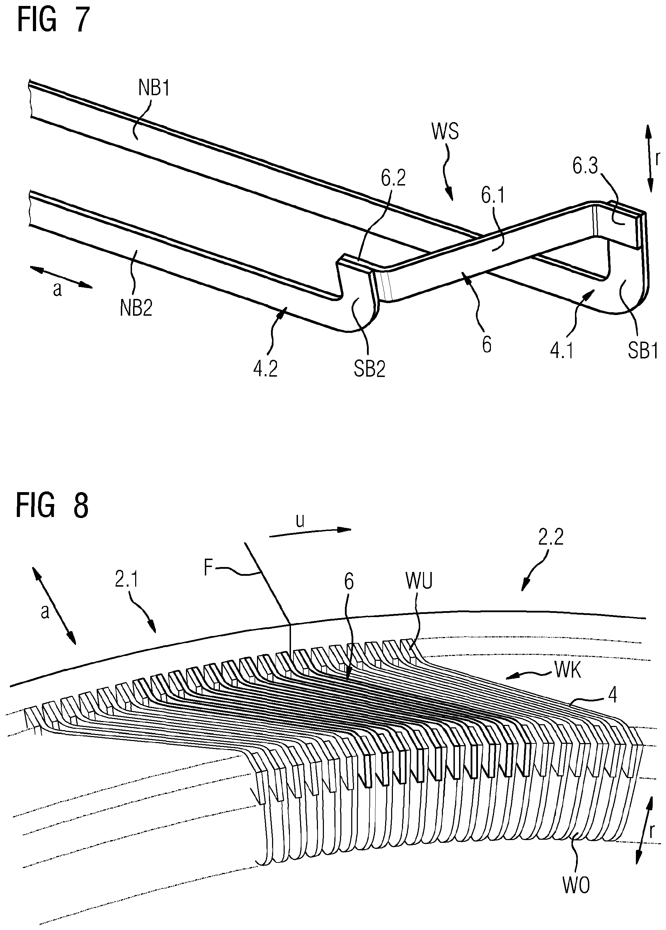

Figur 6 zeigt schematisch eine perspektivische Teilansicht eines Statorsegments 2.1 mit einer Wicklung 4 gemäß einer zweiten Ausführungsform. Figur 7 zeigt schematisch eine perspektivische Einzelansicht eines Wicklungssegments WS gemäß der zweiten Ausführungsform.

Die Wicklung 4 ist hierbei ebenfalls eine Zweischicht-Stabwicklung und umfasst die Wicklungsoberlage WO und Wicklungsunterlage WU gemäß der Beschreibung aus Figur 3.

In der zweiten Ausführungsform sind die Nutenbereiche NB1, NB2 der Oberstäbe 4.1 und Unterstäbe 4.2 jeweils gerade ausgeführt und verlaufen in axialer Richtung a. Die Stirnseitenbereiche SB1, SB2 der Oberstäbe 4.1 und Unterstäbe 4.2 sind jeweils einfach gekröpft, insbesondere radial nach außen gekröpft. Dadurch sind die Stirnseitenbereiche SB1, SB2 jeweils in zwei Bereiche aufgeteilt, die zueinander abgewinkelt sind.

Ein erster, unmittelbar aus der Nut 5 herausragender Bereich erstreckt sich in axialer Richtung a. Ein zweiter Bereich ist zum ersten Bereich abgewinkelt und erstreckt sich in radialer Richtung r nach oben. Der zweite Bereich umfasst das freie Ende des Oberstabs 4.1 bzw. des Unterstabs 4.2. Hierbei weisen der Oberstab 4.1 und der Unterstab 4.2 jedoch unterschiedliche axiale Längen auf. Ein axialer Versatz der freien Enden ist dabei so dimensioniert, dass eine vorgeschriebene Luftstrecke zwischen benachbarten Verbindungselementen 6 eingehalten wird.

Das Verbindungselement 6 ist hierbei ebenfalls bügelartig ausgebildet. Dabei umfasst das Verbindungselement 6 den rampenförmigen Schrägabschnitt 6.1, welcher die beiden abgewinkelten Enden 6.2, 6.3 miteinander verbindet.

Das eine Ende 6.2 des Verbindungselements 6 erstreckt sich dabei im montierten Zustand des Stators 2 in axialer Richtung a nach unten (siehe Figur 6). Insbesondere liegt hierbei eine Seitenfläche des Endes 6.2 auf einer Seitenfläche des freien Endes des Unterstabs 4.2 an. Das andere Ende 6.3 des Verbindungselements 6 erstreckt sich im montierten Zustand des Stators 2 in axialer Richtung a nach oben (siehe Figur 6). Insbesondere liegt hierbei eine Seitenfläche des Endes 6.3 auf einer Seitenfläche des freien Endes des Oberstabs 4.1 an.

Der Schrägabschnitt 6.1 verläuft im montierten Zustand des Stators 2 ausgehend von dem einen Ende 6.2 axial nach oben und tangential zur Umfangsrichtung u (siehe Figur 6). Auch hierbei können die in Umfangsrichtung u zueinander versetzten Ober- und Unterstäbe 4.1, 4.2 mittels des mit dem Schrägabschnitt 6.1 ausgebildeten Verbindungselements 6 jeweils auf einem möglichst kurzen Weg elektrisch leitend miteinander verbunden werden.

Figur 8 zeigt schematisch eine perspektivische Teilansicht zwei miteinander verbundener Statorsegmente 2.1, 2.2 mit der Wicklung 4 gemäß der zweiten Ausführungsform.

Die gezeigten Statorsegmente 2.1, 2.2 sind an der Fügestelle F miteinander verbunden und umfassen die Wicklung 4, welche nun analog zur ersten Ausführungsform zusätzlich die Verbindungselemente 6 umfasst, die die Oberstäbe 4.1 des einen Statorsegments 2.1 mit den Unterstäben 4.2 des anderen Statorsegments 2.2 elektrisch leitend verbinden. Diese Verbindungselemente 6 werden erst nach dem Zusammensetzen der Statorsegmente 2.1, 2.2, also beispielsweise an einem Einsatzort der rotierenden elektrischen Maschine EM, angeordnet und mit den entsprechenden Ober- und Unterstäben 4.1, 4.2 verbunden. Verbindungsstellen zwischen den Verbindungselementen 6 und den Ober- und Unterstäben 4.1, 4.2 werden in bekannter Weise elektrisch isoliert.

Bei dem erfindungsgemäßen Stator 2 sind die Wicklungsköpfe WK gemäß der ersten oder zweiten Ausführungsform ausgebildet. Denkbar ist auch, dass einer der Wicklungsköpfe WK gemäß der ersten Ausführungsform und der andere Wicklungskopf WK gemäß der zweiten Ausführungsform ausgebildet ist. Die Wahl der Ausführungsform kann beispielsweise nach Bauraum und einer Einbausituation erfolgen.

In einem weiteren alternativen Ausführungsbeispiel ist der Stator 2 radial innen und der Rotor radial außen angeordnet. Hierbei sind die Nuten 5 nicht in der inneren Mantelfläche, sondern in einer äußeren Mantelfläche eingebracht. Die zuvor beschriebenen Ausführungsformen für die Wicklung 4 können analog auch für eine rotierende elektrische Maschine EM mit radial innen angeordnetem Stator 2 angewendet werden, wobei die Stirnseitenbereiche SB1, SB2 radial nach innen gekröpft sind.

Bei einer möglichen alternativen Ausgestaltungsvariante des Verbindungselements 6 unterscheidet sich ein Verhältnis von Höhe zu Breite einer Querschnittsfläche des Verbindungselements 6 von einem Verhältnis von Höhe zu Breite einer Querschnittsfläche des Oberstabs 4.1 bzw. Unterstabs 4.2, wobei die Querschnittsflächen in etwa gleich groß sind. Mittels Abmessung der Querschnittsfläche des Verbindungselements 6 kann ein Bauraumbedarf des Wicklungskopfes WK in axialer Richtung a und radialer Richtung r beeinflusst werden. Des Weiteren können die Oberstäbe 4.1 und Unterstäbe 4.2 auch jeweils mittels zweier Verbindungselemente 6 elektrisch leitend miteinander verbunden werden. Ferner können die Verbindungselemente 6 auch jeweils als Dreiecksbügel ausgebildet sein (nicht gezeigt).

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stator (2) für eine rotierende elektrische Maschine (EM), der Stator (2) umfassend
- ein Blechpaket, das eine Mehrzahl von miteinander verbundenen Statorsegmenten (2.1, 2.2) aufweist, die sich jeweils von einer ersten Stirnseite zu einer der ersten Stirnseite gegenüberliegenden zweiten Stirnseite des Blechpakets erstrecken, und
- eine elektrisch leitende Wicklung (4), welche als eine Zweischicht-Stabwicklung ausgebildet ist und welche eine Wicklungsoberlage (WO) und eine Wicklungsunterlage (WU) aufweist, wobei die Wicklungsoberlage (WO) eine Mehrzahl von elektrisch leitfähigen Oberstäben (4.1) und die Wicklungsunterlage (WU) eine Mehrzahl von elektrisch leitfähigen Unterstäben (4.2) umfasst,
- wobei jedes Statorsegment (2.1, 2.2) eine Mehrzahl von sich in eine axiale Richtung (a) erstreckenden Nuten (5) aufweist,
- wobei in jeder Nut (5) ein Oberstab (4.1) und ein Unterstab (4.2) in einer radialen Richtung (r) nebeneinander angeordnet sind und an jeder Stirnseite des Blechpakets mit jeweils einem Stirnseitenbereich (SB1, SB2) aus der Nut (5) in axialer Richtung (a) herausragen, und
- wobei mindestens ein Oberstab (4.1) eines Statorsegments (2.1) mit einem Unterstab (4.2) eines benachbarten Statorsegments (2.2) mittels eines Verbindungselements (6) elektrisch leitend verbunden ist, wobei das Verbindungselement (6) ein freies Ende eines Oberstabs (4.1) mit einem freien Ende eines in Umfangsrichtung (u) zu diesem Oberstab (4.1) versetzten Unterstabs (4.2) elektrisch leitend verbindet,
**dadurch gekennzeichnet, dass**
- das Verbindungselement (6) einen Schrägabschnitt (6.1) aufweist, welcher zwei zu diesem abgewinkelte Enden (6.2, 6.3) miteinander verbindet, und
- das eine Ende (6.2) des Verbindungselements (6) mit dem freien Ende eines Unterstabs (4.2) und das andere Ende (6.3) jedes Verbindungselements (6) mit dem freien Ende eines Oberstabs (4.1) elektrisch leitend verbunden ist, wobei entweder
an wenigstens einer Stirnseite des Blechpakets
- der Stirnseitenbereich (SB1) jedes Oberstabs (4.1) in axialer Richtung (a) geradlinig verlaufend ausgebildet ist,
- der Stirnseitenbereich (SB2) jedes Unterstabs (4.2) zweifach gekröpft ausgebildet ist, und
- das freie Ende jedes Oberstabs (4.1) und jedes Unterstabs (4.2) in axiale Richtung (a) ragen,
oder
an wenigstens einer Stirnseite des Blechpakets
- der Stirnseitenbereich (SB1) jedes Oberstabs (4.1) und der Stirnseitenbereich (SB2) jedes Unterstabs (4.2) einfach gekröpft ausgebildet sind und
- das freie Ende jedes Oberstabs (4.1) und jedes Unterstabs (4.2) in radiale Richtung (r) ragen.

2. Stator (2) nach Anspruch 1, wobei bei einer zweifachen Kröpfung der Stirnseitenbereiche (SB2) der Unterstäbe (4.2) das freie Ende des Oberstabes (4.1) vom freien Ende des in Umfangsrichtung (u) zu diesem Oberstab (4.1) versetzten Unterstabes (4.2) distanziert ist.

3. Stator (2) nach Anspruch 1 oder 2, wobei bei einer zweifachen Kröpfung der Stirnseitenbereiche (SB2) der Unterstäbe (4.2) die Verbindungselemente (6) aus dem gleichen Material wie die Unterstäbe (4.2) und/oder die Oberstäbe (4.1) sind.

4. Stator (2) nach einem der Ansprüche 1 bis 3, wobei bei einer zweifachen Kröpfung der Stirnseitenbereiche (SB2) der Unterstäbe (4.2) alle Oberstäbe (4.1) und Unterstäbe (4.2) auf der wenigstens einen Stirnseite in axialer Richtung (a) gleich weit aus den Nuten (5) herausragen.

5. Stator (2) nach Anspruch 1, wobei bei einer einfachen Kröpfung der Stirnseitenbereiche (SB1,SB2) der Oberstäbe (4.1) und Unterstäbe (4.2) die Oberstäbe (4.1) in axialer Richtung (a) weiter als die Unterstäbe (4.2) aus den Nuten (5) herausragen.

6. Rotierende elektrische Maschine (EM), welche einen Stator (2) gemäß einem der vorhergehenden Ansprüche aufweist.

7. Verfahren zur Montage eines Stators (2) gemäß einem der Ansprüche 1 bis 5, wobei
- in jeder Nut (5) jedes Statorsegments (2.1, 2.2) ein Oberstab (4.1) und ein Unterstab (4.2) angeordnet werden,
- jeder Oberstab (4.1) mit einem ihm zugeordneten Unterstab (4.2) mittels eines Verbindungselements (6) verbunden wird, sofern der Oberstab (4.1) und der Unterstab (4.2) in Nuten (5) desselben Statorsegments (2.1, 2.2) angeordnet sind,
- jedes Statorsegment (2.1, 2.2) mit den in seinen Nuten (5) angeordneten Oberstäben (4.1) und Unterstäben (4.2) sowie den Verbindungselementen (6), die jeweils einen Oberstab (4.1) und einen Unterstab (4.2) des Statorsegments (2.1, 2.2) verbinden, imprägniert wird,
- die imprägnierten Statorsegmente (2.1, 2.2) form- oder kraftschlüssig miteinander verbunden werden und
- nach dem Verbinden der imprägnierten Statorsegmente (2.1, 2.2) mindestens ein Oberstab (4.1) eines Statorsegments (2.1) mit einem Unterstab (4.2) eines benachbarten Statorsegments (2.2) mittels eines Verbindungselements (6) elektrisch leitend verbunden wird.

8. Verfahren nach Anspruch 7, wobei jedes Verbindungselement (6) mit dem freien Ende eines Oberstabs (4.1) und dem freien Ende eines Unterstabs (4.2) verlötet wird.

9. Verfahren nach Anspruch 7 oder 8, wobei für jedes Verbindungselement (6), das einen Oberstab (4.1) und einen Unterstab (4.2) zweier benachbarter Statorsegmente (2.1, 2.2) verbindet, ein Verbindungsbereich zwischen dem Verbindungselement (6) und dem Oberstab (4.1) sowie ein Verbindungsbereich zwischen dem Verbindungselement (6) und dem Unterstab (4.2) elektrisch isoliert werden.

## Claims

1. Stator (2) for a rotating electric machine (EM), the stator (2) comprising
- a laminated core that has a plurality of mutually connected stator segments (2.1, 2.2), which each extend respectively from a first end face to a second end face of the laminated core, said second end face lying opposite the first end face, and
- an electrically conductive winding (4) that is designed as a double-layer bar winding and has a winding top layer (WO) and a winding bottom layer (WU), wherein the winding top layer (WO) comprises a plurality of electrically conductive top bars (4.1) and the winding bottom layer (WU) comprises a plurality of electrically conductive bottom bars (4.2),
- wherein each stator segment (2.1, 2.2) has a plurality of grooves (5) that extend in an axial direction (a),
- wherein a top bar (4.1) and a bottom bar (4.2) are arranged adjacent to one another in a radial direction (r) in each groove (5) and protrude on each end face of the laminated core with respectively an end face region (SB1, SB2) out of the groove (5) in an axial direction (a), and
- wherein at least one top bar (4.1) of a stator segment (2.1) is electrically conductively connected to a bottom bar (4.2) of an adjacent stator segment (2.2) by means of a connecting element (6), wherein the connecting element (6) electrically conductively connects a free end of a top bar (4.1) to a free end of a bottom bar (4.2) that is offset with respect to this top bar (4.1) in the circumferential direction (u),
**characterised in that**
- the connecting element (6) has an inclined section (6.1) that connects two ends (6.2, 6.3) to one another, said ends being angled with respect to said inclined section, and
- the one end (6.2) of the connecting element (6) is electrically conductively connected to the free end of a bottom bar (4.2) and the other end (6.3) of each connecting element (6) is electrically conductively connected to the free end of a top bar (4.1),
wherein either
on at least one end face of the laminated core
- the end face region (SB1) of each top bar (4.1) is designed extending in a straight line in an axial direction (a),
- the end face region (SB2) of each bottom bar (4.2) is designed as bent twice, and
- the free end of each top bar (4.1) and each bottom bar (4.2) protrude in an axial direction (a)
or
on at least one end face of the laminated core
- the end face region (SB1) of each top bar (4.1) and the end face region (SB2) of each bottom bar (4.2) are designed bent once and
- the free end of each top bar (4.1) and each bottom bar (4.2) protrude in a radial direction (r).

2. Stator (2) according to claim 1, wherein, when the end face region (SB2) of the bottom bar (4.2) is bent twice, the free end of the top bar (4.1) is spaced from the free end of the bottom bar (4.2) that is offset with respect to this top bar (4.1) in the circumferential direction (u).

3. Stator (2) according to claim 1 or 2, wherein, when the end face regions (SB2) of the bottom bars (4.2) are bent twice, the connecting elements (6) are of the same material as the bottom bars (4.2) and/or the top bars (4.1).

4. Stator (2) according to one of claims 1 to 3, wherein, when the end face regions (SB2) of the bottom bars (4.2) are bent twice, all the top bars (4.1) and the bottom bars (4.2) protrude on the at least one end face out of the grooves (5) in an axial direction (a) to the same extent.

5. Stator (2) according to claim 1, wherein, when the end face regions (SB1,SB2) of the top bars (4.1) and bottom bars (4.2) are bent once, the top bars (4.1) protrude out of the grooves (5) in an axial direction (a) further than the bottom bars (4.2).

6. Rotating electric machine (EM) that has a stator (2) in accordance with one of the preceding claims.

7. Method for assembling a stator (2) in accordance with one of claims 1 to 5, wherein
- a top bar (4.1) and a bottom bar (4.2) are arranged in each groove (5) of each stator segment (2.1, 2.2),
- each top bar (4.1) is connected by means of a connecting element (6) to a bottom bar (4.2) that is assigned to said top bar insofar as the top bar (4.1) and the bottom bar (4.2) are arranged in grooves (5) of the same stator segment (2.1, 2.2),
- each stator segment (2.1, 2.2) having the top bars (4.1) and bottom bars (4.2), which are arranged in the grooves (5) of said stator segment, and the connecting elements (6), which respectively connect a top bar (4.1) and a bottom bar (4.2) of the stator segment (2.1, 2.2), is impregnated
- the impregnated stator segments (2.1, 2.2) are then connected to one another in a positive-locking or non-positive locking manner and
- after the impregnated stator segments (2.1, 2.2) have been connected, at least one top bar (4.1) of a stator segment (2.1) is electrically conductively connected to a bottom bar (4.2) of an adjacent stator segment (2.2) by means of a connecting element (6).

8. Method according to claim 7, wherein each connecting element (6) is soldered to the free end of a top bar (4.1) and to the free end of a bottom bar (4.2).

9. Method according to claim 7 or 8, wherein for each connecting element (6) that connects a top bar (4.1) and a bottom bar (4.2) of two adjacent stator segments (2.1, 2.2) a connecting region between the connecting element (6) and the top bar (4.1) and a connecting region between the connecting element (6) and the bottom bar (4.2) are electrically insulated.

## Revendications

1. Stator (2) d'une machine (EM) électrique tournante, le stator (2) comprenant :
- un paquet de tôles, qui a une pluralité de segments (2.1, 2.2) statoriques assemblés entre eux, qui s'étendent chacun d'un premier côté frontal à un deuxième côté frontal, opposé au premier côté frontal, du paquet de tôle, et
- un enroulement (4) conducteur de l'électricité, qui est constitué en enroulement à barreaux à deux couches et qui a une couche (WO) supérieure d'enroulement et une couche (WU) inférieure d'enroulement, dans lequel la couche (WO) supérieure d'enroulement comprend une pluralité de barreaux (4.1) supérieurs conducteurs de l'électricité et la couche (WU) inférieure d'enroulement une pluralité de barreaux (4.2) inférieurs conducteurs de l'électricité,
- dans lequel chaque segment (2.1, 2.2) statorique a une pluralité d'encoches (5) s'étendant dans une direction (a) axiale,
- dans lequel dans chaque encoche (5), un barreau (4.1) supérieur et un barreau (4.2) inférieur sont mis l'un à côté de l'autre dans une direction (r) radiale et font saillie dans la direction (a) axiale de l'encoche (5) de chaque côté frontal du paquet de tôles, par respectivement, une partie (SB1, SB2) de côté frontal et
- dans lequel, au moins un barreau (4.1) supérieur d'un segment (2.1) statorique est relié, d'une manière conductrice de l'électricité, à un barreau (4.2) inférieur d'un segment (2.2) statorique voisin au moyen d'un élément (6) de liaison, dans lequel l'élément (6) de liaison relie, d'une manière conductrice de l'électricité, une extrémité libre d'un barreau (4.1) supérieur à une extrémité libre d'un barreau (4.2) inférieur décalé dans la direction (u) périphérique par rapport à ce barreau (4.1) supérieur,
**caractérisé en ce que**
- l'élément (6) de liaison a un tronçon (6.1) incliné, qui relie entre elles deux extrémités (6.2, 6.3) coudées par rapport à celui-ci, et
- l'une des extrémités (6.2) de l'élément (6) de liaison est reliée, d'une manière conductrice de l'électricité, à l'extrémité libre du barreau (4.2) inférieur et l'autre extrémité (6.3) de chaque élément (6) de liaison à l'extrémité libre d'un barreau (4.1) supérieur,
dans lequel ou bien
sur au moins un côté frontal du paquet de tôles,
- la partie (SB1) de côté frontal de chaque barreau (4.1) supérieur est constituée, de manière à s'étendre en ligne droite dans la direction (a) axiale,
- la partie (SB2) de côté frontal de chaque barreau (4.2) inférieur est constituée de manière coudée deux fois et,
- les extrémités libres de chaque barreau (4.1) supérieur et de chaque barreau (4.2) inférieur font saillie dans la direction (a) axiale,
ou bien
sur au moins l'un des côtés frontal du paquet de tôles,
- la partie (SB1) de côté frontal de chaque barreau (4.1) supérieur et la partie (SB2) de côté frontal de chaque barreau (4.2) inférieur sont constituées de manière coudée une fois, et
- les extrémités libres de chaque barreau (4.1) supérieur et de chaque barreau (4.2) inférieur font saillie dans la direction (r) radiale.

2. Stator (2) suivant la revendication 1, dans lequel, lorsque les parties (SB2) de côté frontal des barreaux (4.2) inférieurs sont coudées deux fois, l'extrémité libre du barreau (4.1) supérieur est à distance de l'extrémité libre du barreau (4.2) inférieur décalé dans la direction (u) périphérique par rapport à ce barreau (4.1) supérieur.

3. Stator (2) suivant la revendication 1 ou 2, dans lequel, lorsque les parties (SB2) de côté frontal des barreaux (4.2) inférieurs sont coudées deux fois, les éléments (6) de liaison sont dans le même matériau que celui des barreaux (4.2) inférieurs et/ou des barreaux (4.1) supérieurs.

4. Stator (2) suivant l'une des revendications 1 à 3, dans lequel, lorsque les parties (SB2) de côté frontal des barreaux (4.2) inférieurs sont coudées deux fois, tous les barreaux (4.1) supérieurs et barreaux (4.2) inférieurs font, du au moins un côté frontal, saillie des encoches (5) de la même distance dans la direction (a) axiale.

5. Stator (2) suivant la revendication 1, dans lequel, lorsque les parties (SB1, SB2) de côté frontal des barreaux (4.1) supérieurs et des barreaux (4.2) inférieurs sont coudées une fois,
les barreaux (4.1) supérieurs font saillie des encoches (5) dans la direction (a) axiale davantage que les barreaux (4.2) inférieurs.

6. Machine (EM) électrique tournante, qui a un stator (2) suivant l'une des revendications précédentes.

7. Procédé de montage d'un stator (2) suivant l'une des revendications 1 à 5, dans lequel
- on met dans chaque encoche (5) de chaque segment (2.1, 2.2) statorique un barreau (4.1) supérieur et un barreau (4.2) inférieur,
- on relie chaque barreau (4.1) supérieur à un barreau (4.2) inférieur, qui lui est associé, au moyen d'un élément (6) de liaison, dans la mesure où le barreau (4.1) supérieur et le barreau (4.2) inférieur sont mis dans des encoches (5) du même segment (2.1, 2.2) statorique,
- on imprègne chaque segment (2.1, 2.2) statorique avec les barreaux (4.1) supérieurs et les barreaux (4.2) inférieurs, qui sont mis dans ses encoches (5), ainsi qu'avec les éléments (6) de liaison, qui relient respectivement un barreau (4.1) supérieur et un barreau (4.2) inférieur du segment (2.1, 2.2) statorique,
- on relie entre eux à coopération de forme ou de force des segments (2.1, 2.2) statoriques imprégnés et
- après la liaison des segments (2.1, 2.2) statoriques imprégnés, on relie, d'une manière conductrice de l'électricité, au moins un barreau (4.1) supérieur d'un segment (2.1) statorique à un barreau (4.2) inférieur d'un segment (2.2) statorique voisin au moyen d'un élément (6) de liaison.

8. Procédé suivant la revendication 7, dans lequel on brase chaque élément (6) de liaison avec l'extrémité libre d'un barreau (4.1) supérieur et l'extrémité libre d'un barreau (4.2) inférieur.

9. Procédé suivant la revendication 7 ou 8, dans lequel pour chaque élément (6) de liaison, qui relie un barreau (4.1) supérieur et un barreau (4.2) inférieur de deux segments (2.1, 2.2) statoriques voisins, on isole électriquement une partie de liaison entre l'élément (6) de liaison et le barreau (4.1) supérieur ainsi qu'une partie de liaison entre l'élément (6) de liaison et le barreau (4.2) inférieur.
